# EUROPEAN PATENT APPLICATION

(11) **EP 0 992 895 A1**
(43) Date of publication of application: **12.04.2000**
(21) Application number: 98402463.8
(22) Date of filing: 06.10.1998
(51) Int. Cl.: G06F 9/38

(54) **Hardware accelerator for data processing systems**

(71) Applicant: TEXAS INSTRUMENTS INC., Dallas, Texas 75243 (US); TEXAS INSTRUMENTS FRANCE, 06271 Villeneuve Loubet Cédex (FR)
(72) Inventor: Laurenti, Gilbert, 06570 Saint Paul de Vence (FR); Giacalone, Jean-Pierre, 06140 Vence (FR); Djafarian, Karim, Les Toscanes, Batiment B1 06140 Vence (FR); Laine, Armelle, 06600 Antibes (FR)
(74) Representative: Potter, Julian Mark

(57) **Abstract**

An apparatus and method for allowing a processor in a data processing system to perform multiple operations in a single cycle. In a preferred embodiment of the invention, the data processing apparatus comprises a random access memory, a processor (12, 168), and an interface (102) coupling said random access memory (104) to said processor, said data processing apparatus having the capability of processing multiple operations in a single cycle. In one embodiment of the invention, the interface is described as being a hardware accelerator (102). The invention provides the ability to perform multiple operations in a single cycle without the requirement of a dual or co-processor system in which a second processor works in parallel with a first processor. The interface of the present invention can also be combined with a dual or co-processor system to increase the data processing efficiency.

## Description

### FIELD OF THE INVENTION

The present invention relates to the field of digital signal processors and signal processing systems and, in particular, to a hardware accelerator and hardware acceleration for digital signal processors and data processing systems.

### BACKGROUND OF THE INVENTION

Signal processing generally refers to the performance of real-time operations on a data stream. Accordingly, typical signal processing applications include or occur in telecommunications, image processing, speech processing and generation, spectrum analysis and audio processing and filtering. In each of these applications, the data stream is generally continuous. Thus, the signal processor must produce results, "through-put", at the maximum rate of the data stream.

Conventionally, both analog and digital systems have been utilized to perform many signal processing functions. Analog signal processors, though typically capable of supporting higher through-put rates, are generally limited in terms of their long term accuracy and the complexity of the functions that they can perform. In addition, analog signal processing systems are typically quite inflexible once constructed and, therefore, best suited only to singular application anticipated in their initial design.

A digital signal processor provides the opportunity for enhanced accuracy and flexibility in the performance of operations that are very difficult, if not impracticably complex, to perform in an analog system. Additionally, digital signal processor systems typically offer a greater degree of post-construction flexibility than their analog counterparts, thereby permitting more functionally extensive modifications to be made for subsequent utilization in a wider variety of applications. Consequently, digital signal processing is preferred in many applications.

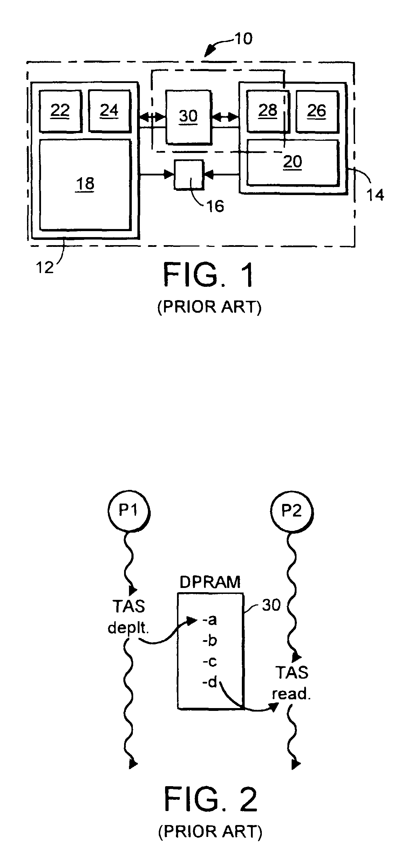

Some operations require the cooperative use of two or more processors. Several processors operating in parallel on different tasks make it possible to increase the overall processing power. The application is shared among the various processors, which must exchange information. The means of exchange generally consists of a serial link or a communication memory. Such a scheme is represented in FIG. 1. FIG. 1 discloses a dual-processor scheme comprising a first processor 12 - in this case a digital signal processor "DSP" (such as a TI-DSP #C54x) - coupled to a second processor 14 (such as an ARM TMS470 processor) - in this case a protocol processor. The core 18 of the DSP 12 is coupled to the core 20 of protocol processor 14 by a synchronizing circuit 16. The DSP 12 further includes a program ROM memory 22 and a local RAM memory 24. Processor 14 includes a program ROM memory 26 and a local RAM memory 28. The local RAM memories 24 and 28 of the DSP 12 and the processor 14 are coupled by a common DPRAM memory 30 with dual port. The synchronizing of the processes P1 and P2 is performed by a test and set instruction TAS which, as indicated in FIG. 2, makes it possible to ensure that a single processor utilizes the memory 30 (or memory zone) at any moment.

There also exist other process synchronizing mechanisms. For example, with the TAS instruction of FIG. 2, the program P1 writes parameters for the program P2 to the DPRAM memory 30. Since the parameters are related, if P2 accesses the memory 30 during modification by P1, there is a risk of error. The program P1 tests, with the TAS instruction, whether the memory 30 is available and generates an occupied signal. During modification of the parameters a, b, c, and d which are in the memory 30, if the program P2 requests access to this memory zone, its TAS instruction returns an occupied signal to it. The program P1 frees the memory 30 at the end of access and the program P2 can then access the memory if it makes a new request.

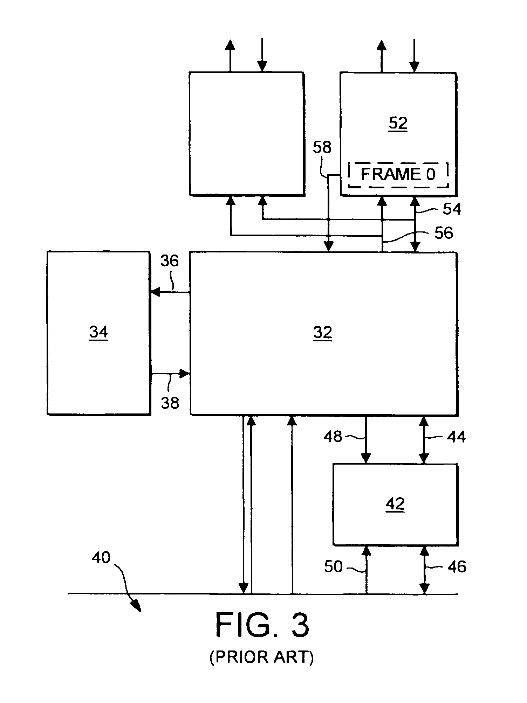

As FIG. 1 shows, each processor has its own ROM program memory 22, 26 respectively, a local work memory 24, 28 and a processor core 18, 20. The synchronizing means 16 and the DPRAM 30 are common to both processors. The overall diagram of processor 14 is represented in FIG. 3. The processor includes a processor proper 32 connected to a program memory 34 by an address bus 36 and an instruction bus 38. It is connected at data-stream level to a main processor 40 across a communication RAM memory 42 connected to each of the processors by a data bus 44, 46 and corresponding address bus 48, 50. The processor 32 can also be connected by data buses and selection and address buses 54, 56 to a hardwired logic block 52 permitting the shaping of signals for a particular processing which would be too costly to carry out by means of the protocol processor 32. The logic block 52 is moreover connected to the processor 32 by an interrupt line 58.

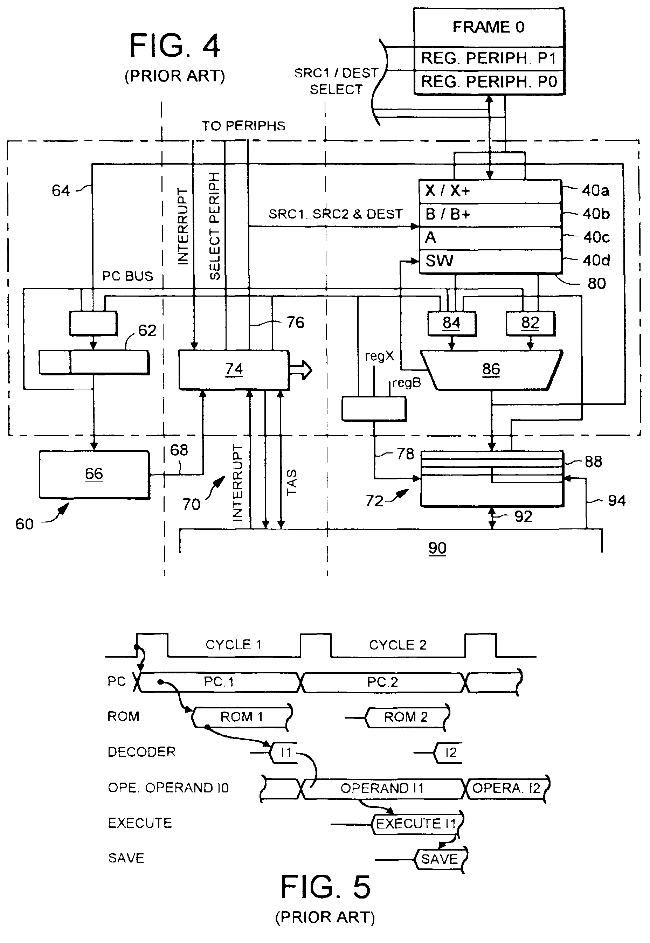

FIG. 4 shows in more detail the protocol processor, which in fact comprises three pans. A program part denoted with the general reference numeral 60 contains an incrementation register 62 which is incremented with each cycle except when an immediate value PMA is loaded by way of a bus 64. The register 62 generates the address of a memory in the shape of a program 66 which itself generates an instruction on a bus 68. The processor further comprises a decoder pan denoted by the general reference numeral 70 which receives the code of the instruction from the program ROM memory 66. This instruction is executed in two cycles in pipeline mode as the diagram of FIG. 5 shows.

During the cycle 1 indicated in this figure, the program memory 66 is read at the address PC1 of the incrementation register 62. At the end of the cycle, the instruction I1 delivered by the program memory 60 is decoded. During cycle 2, the operators of the instruction are read at the addresses specified by the code and the data pan 72 which supplements the processor and which will subsequently be described executes the instruction. The result is stored at the address specified by the code of the instruction at the end of cycle 2. During cycle 2, the decoder 74 of the decoding part executes the same process on the instruction I2 situated at the address PC2 of the register 62.

With each cycle the decoder generates, on the bus 76, the address of the register used in the instruction and/or a RAM memory address on the bus 78. The decoder 74 which also plays the role of monitoring device receives from both sides interrupt signals and test and set signals TAS which are intended for synchronization. The data part 72 of the processor consists of a bank of registers 80 connected to two multiplexors MUX A and MUX B 82 and 84, intended for selecting the various registers or the RAM memories at the input of an arithmetic and logic and shift unit 86. The operation defined in the field of the instruction is executed between the two values at the inputs A and B of the arithmetic and logic values at the inputs A and B of the arithmetic and logic and shift unit 86 and the result is carried within the same cycle to the destination address. This destination address is embodied in the diagram of FIG. 4 by a dual-port memory 88 which is common to the protocol processor and to the main processing unit CPU 90 with which it is associated. The memory 88 is connected to the CPU 90 by means of a data and address bus 92, 94.

One example of a protocol processor 14 is the ARM 7X processor. The ARM processor performs co-processor "data operations", "data transfers", and "register transfers". The processor utilizes a condition field, a co-processor operation code on four-bits, co-processor operand register, destination, and co-processor number to identify it - three bits. The total instruction size of the ARM 7X processor is sufficient to support eight co-processors and sixteen op-codes. There is also a co-processor information and co-processor operand register - two operand registers and one destination. As an example, the ARM device may send an instruction to the processor, such as "start this task". The instruction is typically multi-cycle. The instruction has all the synchronization signals to load the co-processor (DSP 12 in this case), to take the communication bus, do its computation, compute any resulting value and then send any information to the ARM - e.g., saying that the value is ready. There is a minimum cost to be able to run the interface (values s & v). So, "s" is the time to do the operation and "v" is the number of cycles spent in the co-processor busy wait. There is also a recovery time from the busy wait. As a result, there is a penalty to use it.

In the prior art (see Figs. 1-5), there is a protocol processor (ARM (7x) in this case) in which any change within the co-processor (DSP 12 in this case), in terms of data (via a bus, an instruction, and so forth), requires that the protocol processor use a memory bus and a RAM. First, processing within the co-processor (CDP) is performed. Next, a register to register transfer (MCR) is performed, after which there is a transfer of the (LDC/STC) - three cycles in all. Throughout all of this, the co-processor (DSP) does not see the resources inside the protocol processor (ARM 7X). While the co-processor (DSP 12) has its own set of resources that allows it to perform some processing on its own, everything that relates to talking to the environment of the protocol processor (ARM 7X) - i.e., software, the bus, the RAM, etc., is under control of the protocol processor (ARM 7X) with specific instructions and adds additional cycles to the time needed to perform multiple operations. What is needed is an improved technique for allowing a processor to perform multiple operations in a single cycle operation. Such improved technique should be useable in conjunction with the co-processor (DSP) to perform some of the functionality currently performed by the protocol processor and in fewer instructions than is presently required, or it could be used in conjunction with a single processor system.

### SUMMARY OF THE INVENTION

The present invention discloses an apparatus and method for allowing a processor in a data processing system to perform multiple operations in a single cycle. In a preferred embodiment of the invention, the data processing apparatus comprises a random access memory, a processor, and an interface coupling said random access memory to said processor, said data processing apparatus having the capability of processing multiple operations in a single cycle. In one embodiment of the invention, the interface is described as being a hardware accelerator. The invention provides the ability to perform multiple operations in a single cycle without the requirement of a dual or co-processor system in which a second processor works in parallel with a first processor. The interface of the present invention can also be combined with a dual or co-processor system to increase the data processing efficiency.

### BRIEF DESCRIPTION OF THE DRAWINGS

For a more complete understanding of the present invention and for further advantages thereof, reference is now made to the following detailed description in conjunction with the drawings in which:
FIG. 1 is a block diagram of a prior art dual-processor data processing system.
FIG. 2 represents the writing by a program P1 of parameters for a program P2 in a memory of the system of FIG. 1.
FIG. 3 is a general overall diagram of processor 14 of FIG. 1.
FIG. 4 is a more detailed overall diagram of processor 14 of FIG. 1.
FIG. 5 is a chart representing signals at diverse points of processor 14 of FIG. 4.
FIG. 6 is a block diagram of a data processing system according to one embodiment of the invention.
FIG. 7 is a schematic diagram of hardware accelerator 102 of FIG. 6, according to one embodiment of the invention.
FIG. 8 is a block diagram of hardware accelerator 102, according to another embodiment of the invention in which the data flow mode is [Acx,ACy]=copr(Acx,ACy,Xmem,Ymem,Coef).
FIG. 9 is a block diagram of hardware accelerator 102, according to another embodiment of the invention in which the data flow mode are [Acx,ACy]=copr(ACy,Xmem,Ymem,Coef) or [Acx,ACy]=copr(Acx,Xmem,Ymem,Coef).
FIG. 10 is a block diagram of hardware accelerator 102, according to yet another embodiment of the invention in which the dataflow mode is [Acx,ACy]=copr(Xmem,Ymem,Coef).
FIG. 11 is a block diagram of hardware accelerator 102, according to still yet another embodiment of the invention in which the dataflow mode is [Acx,ACy]=copr(Acx,ACy,Xmem,Ymem). Bus 124 couples decoder 126 to register 128.
FIG. 12 is a block diagram of hardware accelerator 102, according to another embodiment of the invention in which dataflow mode is ACy=copr(Acx,Xmem,Ymem) or ACy=copr(Acx,Lmem).
FIG. 14 is a block diagram of hardware accelerator 102, according to still yet another embodiment of the invention in which the dataflow mode is ACy=copr(Ymem,Coef).
FIG. 15 is a block diagram of hardware accelerator 102, according to yet another embodiment of the invention in which the dataflow mode is ACy=copr(Acx,Smem).
FIG. 16 is a block diagram of hardware accelerator 102, according to still yet another embodiment of the invention in which the dataflow mode is [Acx,ACy]=copr(Acx,ACy).
FIG. 17 is a block diagram of hardware accelerator 102, according to yet another embodiment of the invention in which the dataflow mode is ACy=copr(Acx,ACy).
FIG. 18 is a timing diagram for a single cycle operation.
FIG. 19 illustrates a reference widow with 20x20 pixels.
FIG. 20 illustrates a source macroblock with 16x16 pixels.
FIG. 21 is a block diagram of a data processing system according to another embodiment of the invention.
FIG. 22 illustrates a portable telephone that incorporates the present invention.
FIG. 23 is a block diagram of various peripherals coupled to processor 168.
FIG. 24 is a block diagram of the major components of telephone 150.
FIG. 25 is a schematic diagram of telephone 150 of FIG. 24.

### DETAILED DESCRIPTION OF PREFERRED EMBODIMENTS

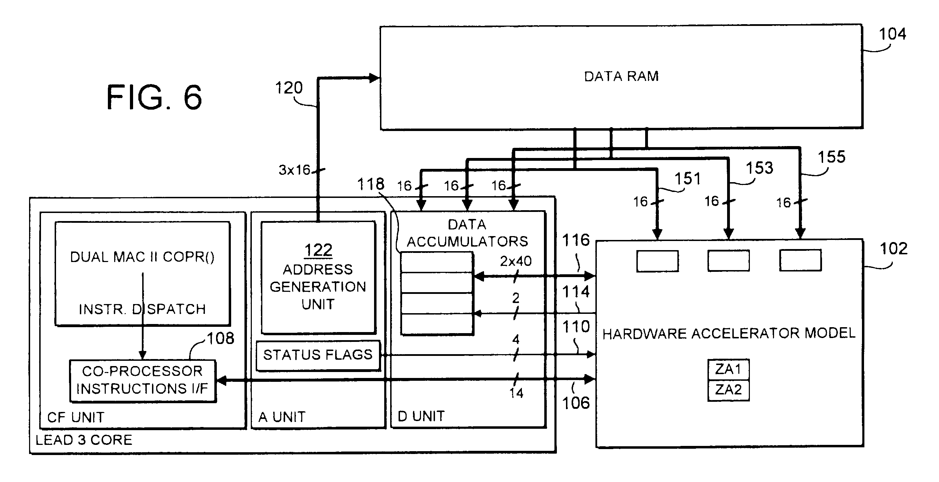

FIG. 6 illustrates an apparatus in which a hardware accelerator 102 couples a processor 12 (a TI-DSP C55X, according to a preferred embodiment of the invention) to a data RAM 104, in a scheme that improves processing efficiency over that available in the prior art, according to one embodiment of the invention. Sixteen bit data buses 151, 152 and 153 couple hardware accelerator 102 to random access memory "RAM" 104 and to data accumulators 118. A thirteen-bit data bus 106 couples hardware accelerator 102 to co-processor instructions I/F of processor 108. A four-bit data bus 110 couples hardware accelerator 102 to status flags 112 of processor 108. A two-bit data bus 114 and a 2x40 bit data bus 116 couple hardware accelerator 102 to data accumulator 118 and a 3x16 bit address bus 120 couples address generation unit 122 to RAM 104. A pin list of the module and meaning is shown in table 1.

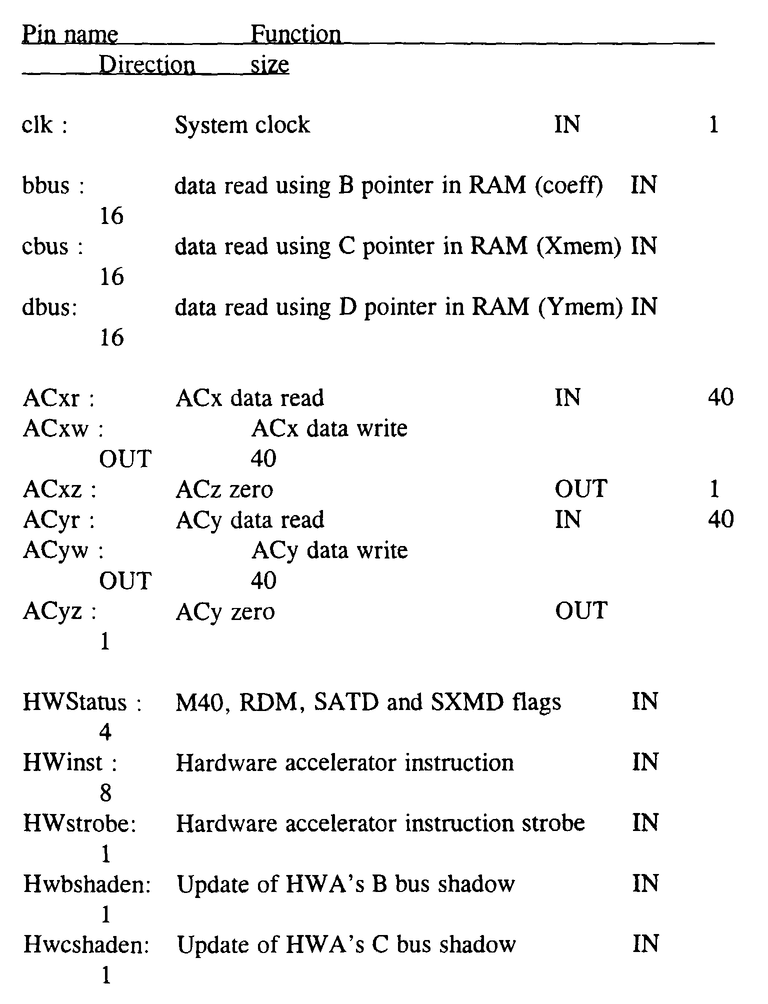

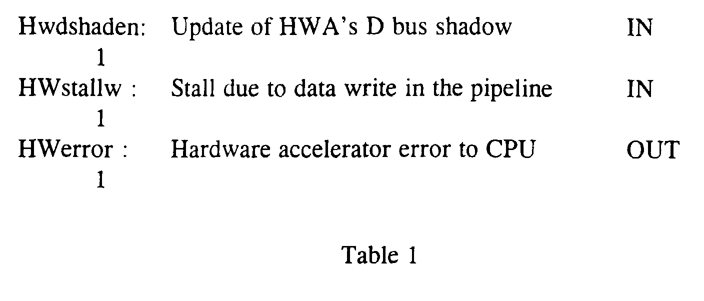

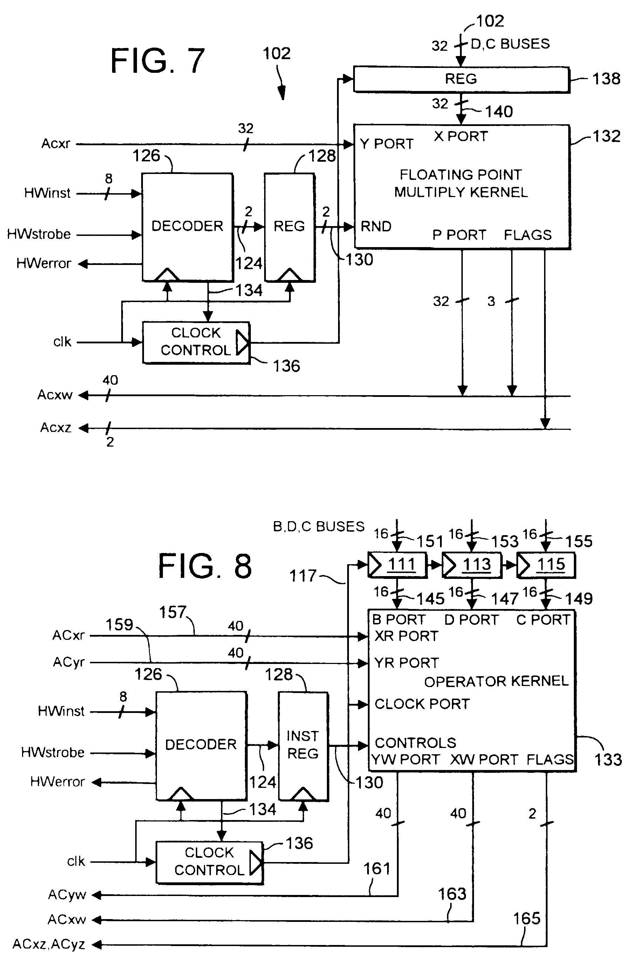

FIG. 7 is a block diagram of hardware accelerator 102, according to one embodiment of the invention. Bus 124 couples decoder 126 to register 128. Bus 130 couples register 128 to the Rnd input of floating point multiply kernel 132. A lead line 134 couples decoder 126 to clock control 136. A lead line 117 couples clock control 136 to register 138. A bus 140 couples register 138 to the X port of floating point multiply kernel 132. A bus 142 couples register 138 to the D and C buses (not shown). The Y port of floating point multiply kernel 132 is coupled to bus 199 (ACxr). The P port of floating point multiply kernel 132 is coupled bus 121, which is coupled to bus 127 (ACxw). One Flag output of floating point multiply kernel 132 is coupled to bus 123, which is coupled to bus 127, and another Flag output of floating point multiply kernel 132 is coupled to a signal line 125, which is coupled to bus 129 (ACxz). to receive an "ACxr" bus and coupled to output an "ACxw" bus and an "ACxz" signal. Decoder 126 is coupled to receive an "Hwinst" signal and an "HWStrobe" signal and coupled to output an "HWerror" signal. Decoder 126, register 128 and clock control 136 are all coupled to receive a clock signal.

FIG. 8 is a block diagram of hardware accelerator 102, according to another embodiment of the invention in which the data flow mode is [Acx,ACy]=copr(Acx,ACy,Xmem,Ymem,Coef). Bus 124 couples decoder 126 to register 128. Bus 130 couples register 128 to operator kernel 133. A lead line 134 couples decoder 126 to clock control 136. A lead line 117 couples clock control 136 to register 139 and to the clock port of operator kernel 133. A bus 145 couples register 111 to the B port of operator kernel 133. A bus 147 couples register 113 to the D port of operator kernel 133. A bus 149 couples register 115 to the C port of operator kernel 133. Register 111 is coupled to bus 151 (B bus), register 113 is coupled to bus 153 (D bus), register 115 is coupled to bus 155 (C bus) and registers 111, 113 and 115 are also coupled to each other. The XR port of operator kernel 133 is coupled to bus 157 (ACxr). The YR port of bus operator kernel 133 is coupled to bus 159 (ACyr). The YW port of operator kernel 133 is coupled to bus 161 (ACyw). The XW port of operator kernel 133 is coupled to bus 163 (ACxw). The flags output of operator kernel 133 is coupled to bus 165 (ACxz, ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

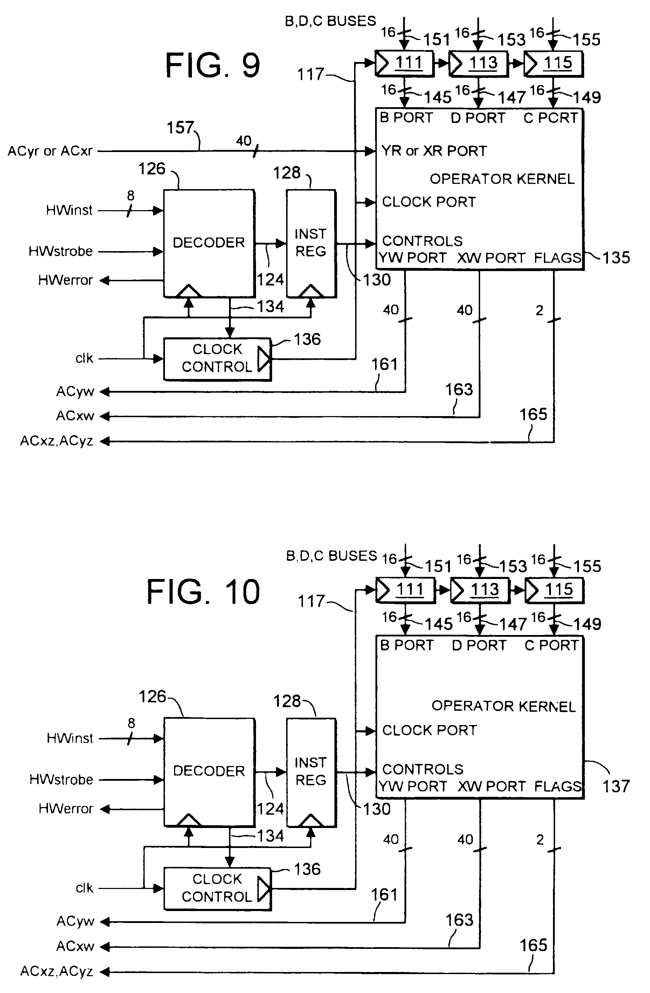

FIG. 9 is a block diagram of hardware accelerator 102, according to another embodiment of the invention in which the data flow mode are [Acx,ACy]=copr(ACy,Xmem,Ymem,Coef) or [Acx,ACy]=copr(Acx,Xmem,Ymem,Coef). Bus 124 couples decoder 126 to register 128. Bus 130 couples register 128 to operator kernel 135. A lead line 134 couples decoder 126 to clock control 136. A lead line 117 couples clock control 136 to register 111 and to the clock port of operator kernel 135. A bus 145 couples register 111 to the B port of operator kernel 135. A bus 147 couples register 113 to the D port of operator kernel 135. A bus 149 couples register 115 to the C port of operator kernel 135. Register 111 is coupled to bus 151 (B bus), register 113 is coupled to bus 153 (D bus), register 115 is coupled to bus 155 (C bus) and registers 111, 113 and 115 are also coupled to each other. One of a YR port or an XR port is coupled to bus 157 (ACyr in the case of YR port and ACxr in the case of XR port). The YW port of operator kernel 135 is coupled to bus 161 (ACyw). The XW port of operator kernel 135 is coupled to bus 163 (ACxw). The flags output of operator kernel 135 is coupled to bus 165 (ACxz, ACys). Decoder 126 is coupled to receive an "Hwinst" signal and an "HWStrobe" signal and coupled to output an "HWerror" signal. Decoder 126, register 128 and clock control 136 are all coupled to receive a clock signal.

FIG. 10 is a block diagram of hardware accelerator 102, according to yet another embodiment of the invention in which the dataflow mode is [Acx,ACy]=copr(Xmem,Ymem,Coef). Bus 124 couples decoder 126 to register 128. Bus 130 couples register 128 to operator kernel 137. A lead line 134 couples decoder 126 to clock control 136. A lead line 117 couples clock control 136 to register 139 and to the clock port of operator kernel 137. A bus 145 couples register 139 to the B port of operator kernel 135. A bus 147 couples register 141 to the D port of operator kernel 137. A bus 149 couples register 143 to the C port of operator kernel 135. Register 111 is coupled to bus 151 (B bus), register 113 is coupled to bus 153 (D bus), register 115 is coupled to bus 155 (C bus) and registers 111, 113 and 115 are also coupled to each other. One of a YR port or an XR port of operator kernel 137 is coupled to bus 157 (ACyr in the case of YR port and ACxr in the case of XR port). The YW port of operator kernel 137 is coupled to bus 161 (ACyw). The XW port of operator kernel 137 is coupled to bus 163 (ACxw). The flags output of operator kernel 137 is coupled to bus 165 (ACxz, ACys). Decoder 126 is coupled to receive an "Hwinst" signal and an "HWStrobe" signal and coupled to output an "HWerror" signal. Decoder 126, register 128 and clock control 136 are all coupled to receive a clock signal.

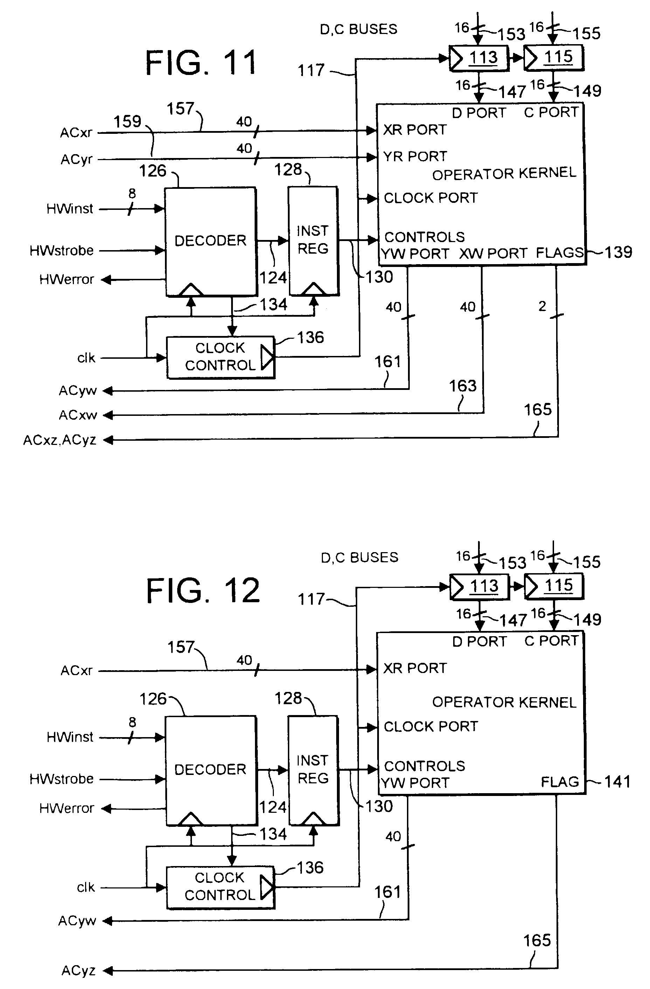

FIG. 11 is a block diagram of hardware accelerator 102, according to still yet another embodiment of the invention in which the dataflow mode is [Acx,ACy]=copr(Acx,ACy,Xmem,Ymem). Bus 124 couples decoder 126 to register 128. Bus 130 couples register 128 to operator kernel 139. A lead line 134 couples decoder 126 to clock control 136. A lead line 117 couples clock control 136 to register 141 and to the clock port of operator kernel 139. A bus 147 couples register 141 to the D port of operator kernel 139. A bus 149 couples register 143 to the C port of operator kernel 139. Register 113 is coupled to bus 153 (D bus), register 115 is coupled to bus 155 (C bus) and registers 113 and 115 are also coupled to each other. The XR port of operator kernel 139 is coupled to bus 157 (ACxr). The YR port of bus operator kernel 139 is coupled to bus 159 (ACyr). The YW port of operator kernel 139 is coupled to bus 161 (ACyw). The XW port of operator kernel 139 is coupled to bus 163 (ACxw). The flags output of operator kernel 139 is coupled to bus 165 (ACxz, ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

FIG. 12 is a block diagram of hardware accelerator 102, according to another embodiment of the invention in which dataflow mode is ACy=copr(Acx,Xmem,Ymem) or ACy=copr(Acx,Lmem). Bus 124 couples decoder 126 to register 128. Bus 130 couples register 128 to operator kernel 141. A lead line 134 couples decoder 126 to clock control 136. A lead line 117 couples clock control 136 to register 113 and to the clock port of operator kernel 141. A bus 147 couples register 113 to the D port of operator kernel 141. A bus 149 couples register 115 to the C port of operator kernel 141. Register 113 is coupled to bus 153 (D bus), register 115 is coupled to bus 155 (C bus) and registers 113 and 115 are also coupled to each other. The XR port of operator kernel 141 is coupled to bus 157 (ACxr). The YW port of operator kernel 141 is coupled to bus 161 (ACyw). The flag output of operator kernel 141 is coupled to bus 165 (ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

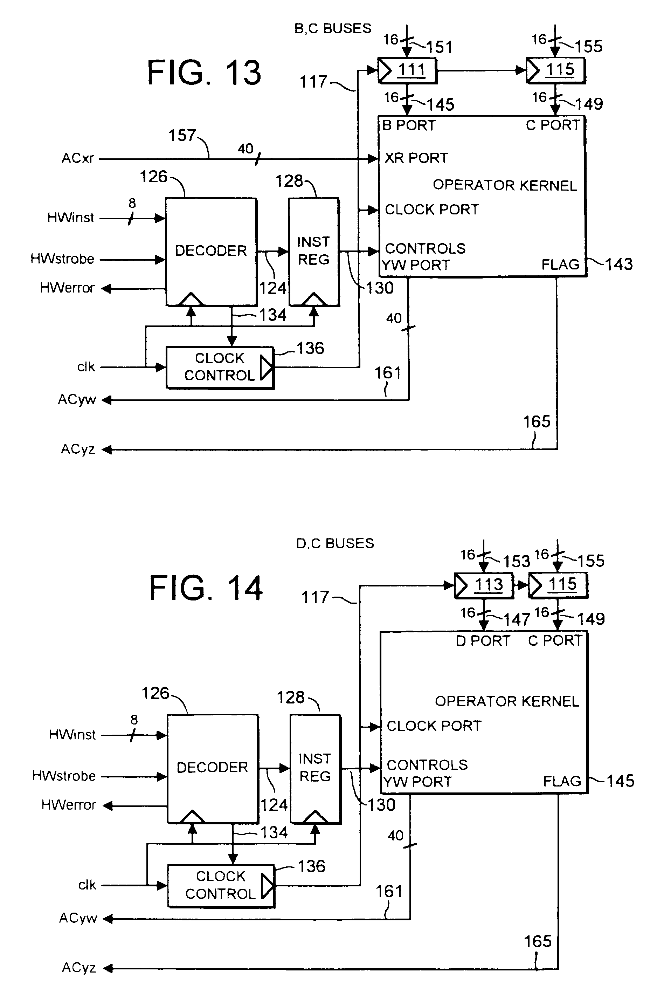

FIG. 13 is a block diagram of hardware accelerator 102, according to yet another embodiment of the invention in which the dataflow mode is ACy=copr(Acx,Ymem,Coef). Bus 124 couples decoder 126 to register 128. Bus 130 couples register 128 to operator kernel 143. A lead line 134 couples decoder 126 to clock control 136. A lead line 117 couples clock control 136 to register 111 and to the clock port of operator kernel 143. A bus 145 couples register 111 to the B port of operator kernel 143. A bus 149 couples register 115 to the C port of operator kernel 143. Register 111 is coupled to bus 151 (B bus), register 115 is coupled to bus 155 (DC bus) and registers 111 and 115 are also coupled to each other. The XR port of operator kernel 141 is coupled to bus 157 (ACxr). The YW port of operator kernel 143 is coupled to bus 161 (ACyw). The flag output of operator kernel 143 is coupled to bus 165 (ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

FIG. 14 is a block diagram of hardware accelerator 102, according to still yet another embodiment of the invention in which the dataflow mode is ACy=copr(Ymem,Coef). Bus 124 couples decoder 126 to register 128. Bus 130 couples register 128 to operator kernel 145. A lead line 134 couples decoder 126 to clock control 136. A lead line 117 couples clock control 136 to register 113 and to the clock port of operator kernel 145. A bus 147 couples register 113 to the D port of operator kernel 145. A bus 149 couples register 115 to the C port of operator kernel 145. Register 113 is coupled to bus 153 (D bus), register 115 is coupled to bus 155 (C bus) and registers 113 and 115 are also coupled to each other. The YW port of operator kernel 145 is coupled to bus 161 (ACyw). The flag output of operator kernel 145 is coupled to bus 165 (ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

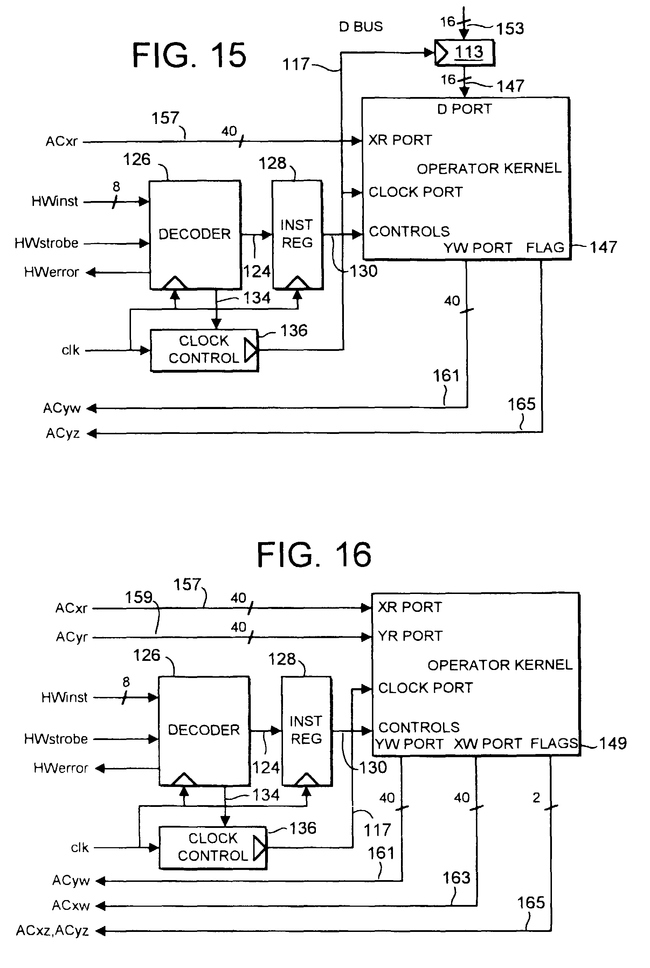

FIG. 15 is a block diagram of hardware accelerator 102, according to yet another embodiment of the invention in which the dataflow mode is ACy=copr(Acx,Smem). Bus 124 couples decoder 126 to register 128. Bus 130 couples register 128 to operator kernel 147. A lead line 134 couples decoder 126 to clock control 136. A lead line 117 couples clock control 136 to register 113 and to the clock port of operator kernel 147. A bus 147 couples register 113 to the D port of operator kernel 147. Register 113 is also coupled to bus 153 (D bus). The XR port of operator kernel 147 is coupled to bus 157 (ACxr). The YW port of operator kernel 147 is coupled to bus 161 (ACyw). The flag output of operator kernel 147 is coupled to bus 165 (ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

FIG. 16 is a block diagram of hardware accelerator 102, according to still yet another embodiment of the invention in which the dataflow mode is [Acx,ACy]=copr(Acx,ACy). Bus 124 couples decoder 126 to register 128. Bus 130 couples register 128 to operator kernel 149. A lead line 134 couples decoder 126 to clock control 136. A lead line 117 couples clock control 136 to the clock port of operator kernel 149. The XR port of operator kernel 149 is coupled to bus 157 (ACxr). The YR port of bus operator kernel 149 is coupled to bus 159 (ACyr). The YW port of operator kernel 149 is coupled to bus 161 (ACyw). The XW port of operator kernel 149 is coupled to bus 163 (ACxw). The flags output of operator kernel 149 is coupled to bus 165 (ACxz, ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

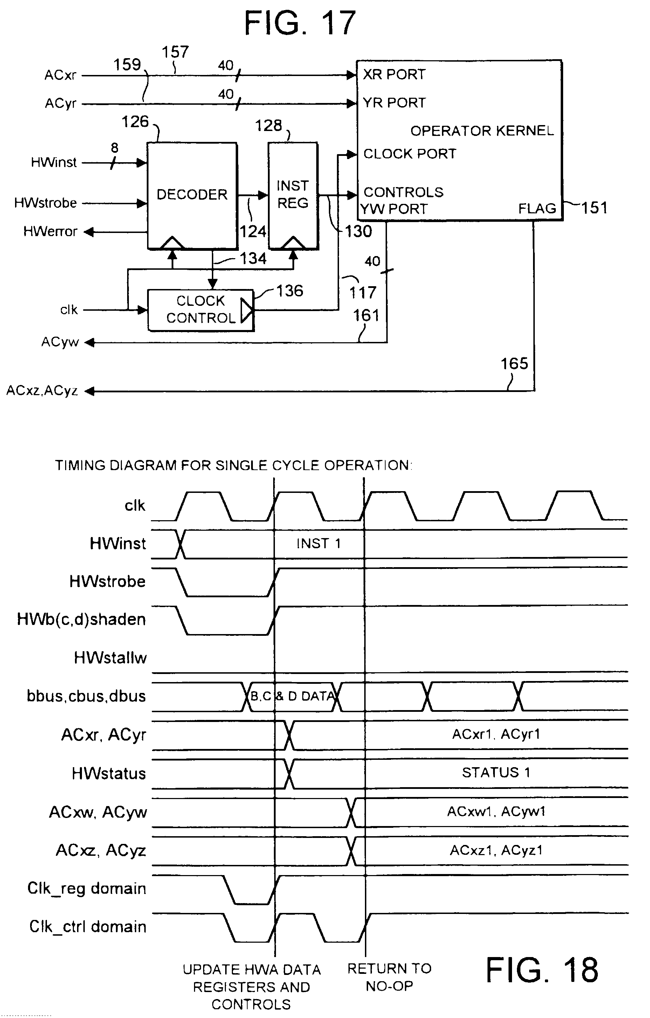

FIG. 17 is a block diagram of hardware accelerator 102, according to yet another embodiment of the invention in which the dataflow mode is ACy=copr(Acx,ACy). Bus 124 couples decoder 126 to register 128. Bus 130 couples register 128 to operator kernel 151. A lead line 134 couples decoder 126 to clock control 136. A lead line 117 couples clock control 136 to the clock port of operator kernel 151. The XR port of operator kernel 151 is coupled to bus 157 (ACxr). The YR port of bus operator kernel 151 is coupled to bus 159 (ACyr). The YW port of operator kernel 151 is coupled to bus 161 (ACyw). The flag output of operator kernel 151 is coupled to bus 165 (ACxz, ACyz). Decoder 126 is coupled to receive an "Hwinst" signal and an "HWStrobe" signal and coupled to output an "HWerror" signal. Decoder 126, register 128 and clock control 136 are all coupled to receive a clock signal.

Moreover, any of the configurations of hardware accelerator 102 in drawing figures 7-17 can also be mixed together to form a single hardware accelerator. No matter which hardware accelerator configuration is selected, a set of qualifiers in the instruction set of processor 12 (〈 〈 copr() 〉 〉 class) redefines the meaning of an instruction executing operations within the data processing unit (Dunit) of the DSP core. These instructions can include references that allow:
- control for a dual access to data via two pointers,
- control for a third data value from an other memory bank,
- control of more data sources from accumulators,
- control for destinations(s) of re-defined operation,
- the controls for the new operation.
The 〈 〈 copr() 〉 〉 qualifiers class consists of 4 parallelisable opcodes which allow to pass the 8-bit instruction field to the hardware accelerator 102 in different ways and allow store operations to happen in parallel of the hardware accelerator execution. All properties and opcodes format are summarized in Table 2 below :

**Table 2**

| Opcode syntax | Format | Comments |
|---|---|---|
| Copr(k6) | 16-bit | Merges "k6" field with some instruction fields to build hardware accelerator instruction. |
| | | No write from ACs in parallel of HWA execution. |
| copr() | 8-bit | HWA instruction field is built from fields of the qualified instruction. |
| | | No write from ACs in parallel of HWA execution. |
| Smem=Acx,copr() | 24-bit | Merges a 4-bit field from this qualifier to fields from the qualified instruction. |
| | | Smem write from ACs allowed in parallel. |
| Lmem=Acx,copr() | 24-bit | Merges a 4-bit field from this qualifier to fields from the qualified instruction. |
| | | Lmem write from ACs allowed in parallel. |

Combining above qualifiers with D Unit instructions creates a set of dataflows that can be used by the hardware accelerator 102. They are summarized in the table below, which gives the number of hardware accelerators available per dataflow and the cost in bytes of the qualified pair. For the sake of implementation of the hardware connection to the core when multiple accelerators are present in an application, the hardware accelerator 102 instruction field is divided in 2 parts :
- bits 7-6 indicate the number of the hardware accelerator (up to 8 can be
   connected),
- bits 5-0 indicate the instruction code for the selected HWA (up to 32
   instructions HWA).
When instruction fields exported to the hardware accelerator 102 cannot fill the upper 3 bits, then less than 8 hardware accelerators are available for such dataflow.

The dataflow mode describes the call to the hardware accelerator 102. The syntax used in below Table 3 utilizes the generic keyword "copr()" as a short form of the qualified instruction and qualifier opcode pair. The built-in parallelism syntax (ex: ACy=copr(ACx), Smem=ACz) is used for Smem or Lmem writes that are allowed in parallel of the execution in the hardware accelerator 102.

**Table 3**

| HWA dataflow Modes | Number of Accelerators Available | Number of Instructions / Accelerators | Instruction size/(cost of qualifier) |
|---|---|---|---|
| | | | |
| ACy=copr(ACx,ACy) | 8 | 32 | 4(+2) |
| ACy=copr(ACx,ACy), Smem=Acz | 4 | 32 | 5(+1) |
| ACy=copr(ACx,ACy), Lmem=Acz | 4 | 32 | 5(+0) |
| [ACx,Acy]=copr(ACx,ACy) | 8 | 32 | 5(+2) |
| [ACx,Acy]=copr(ACx,ACy), Smem=Acz | 8 | 32 | 6(+1) |
| [ACx,Acy]=copr(ACx,ACy), Lmem=Acz | 8 | 32 | 6(+0) |
| ACy=copr(Acx,Smem) | 8 | 32 | 5(+2) |
| ACy=copr(Acx,Smem), Smem=Acz | 2 | 32 | 6(+1) |
| ACy=copr(ACx,Lmem) | 8 | 32 | 5(+2) |
| ACy=copr(ACx,Lmem), Lmem=Acz | 2 | 32 | 6(+0) |
| ACy=copr(ACx,Xmem,Ymem) | 8 | 32 | 6(+2) |
| | 2 | 32 | 5(+1) |
| [ACx,Acy]=copr(ACx,ACy,Xmem,Ymem) | 8 | 32 | 6(+2) |
| ACx=copr(Ymem,Coef), mar(Xmem) | 8 | 32 | 6(+2) |
| ACx=copr(ACx,Ymem,Coef), mar(Xmem) | 8 | 32 | 6(+2) |
| [ACx,Acy]=copr(Xmem,Ymem,Coef) | 8 | 32 | 6(+2) |
| [ACx,Acy]=copr(ACx,Xmem,Ymem,Coef) | 8 | 32 | 6(+2) |
| [ACx,Acy]=copr(ACy,Xmem,Ymem,Coef) | 8 | 32 | 6(+2) |
| [ACx,Acy]=copr(ACx,ACy,Xmem,Ymem,Coef) | 8 | 32 | 6(+2) |
| | 3 | 32 | 5(+1) |

The control field of the hardware accelerator 102 may be extracted from dedicated locations of each qualified instruction. The concatenation of these bits creates a value which may be, itself, concatenated to bit fields coming from the qualifier, and which is used for external custom decoding. Tables 4-7 below describe the instruction formats and fields used to export this encoding (see Instruction Set User's guide for TI-DSP #C55x for more information).

**Table 4**

| Qualified instruction By copr(k6) | Instruction format (e = bit exported) | Dataflow mode |
|---|---|---|
| Max_diff(ACx,Acy,ACz,ACw) | OOOO OOOE SSDD oooo | [Acx,ACy]= copr(ACx,ACy) |
| | SSDD xxxx | |
| | OOOO OOOE SSDD oooo | |
| | SSDD xxee | |
| | HWA inst=[eek6] (00 to FF) | |
| Sqdst(Xmem,Ymem,ACx,ACy) (1) | OOOO OOOO XXXM | [Acx,ACy]= copr(ACx,ACy,X mem, Ymem) |
| Abdst(Xmem,Ymem,ACx,ACy) (2) | MMYY YMMM DDDD ooox | |
| | ppp% | |
| | OOOO OOOO XXXM | |
| | MMYY YMMM DDDD ooox | |
| | ppee | |
| | HWA inst=[eek6](1: 00 to | |
| | 7F, 2: 80 to FF) | |
| ACy=rnd(Smem*Acx) | OOOO OOOO AAAA AAAI | ACy=copr(ACx, Smem) |
| (,[DR3=Smem] is not validated) | SSDD ooU% | |
| | OOOO OOOO AAAA AAAI | |
| | SSDD ooee | |
| | HWA inst=[eek6] (00 to FF) | |

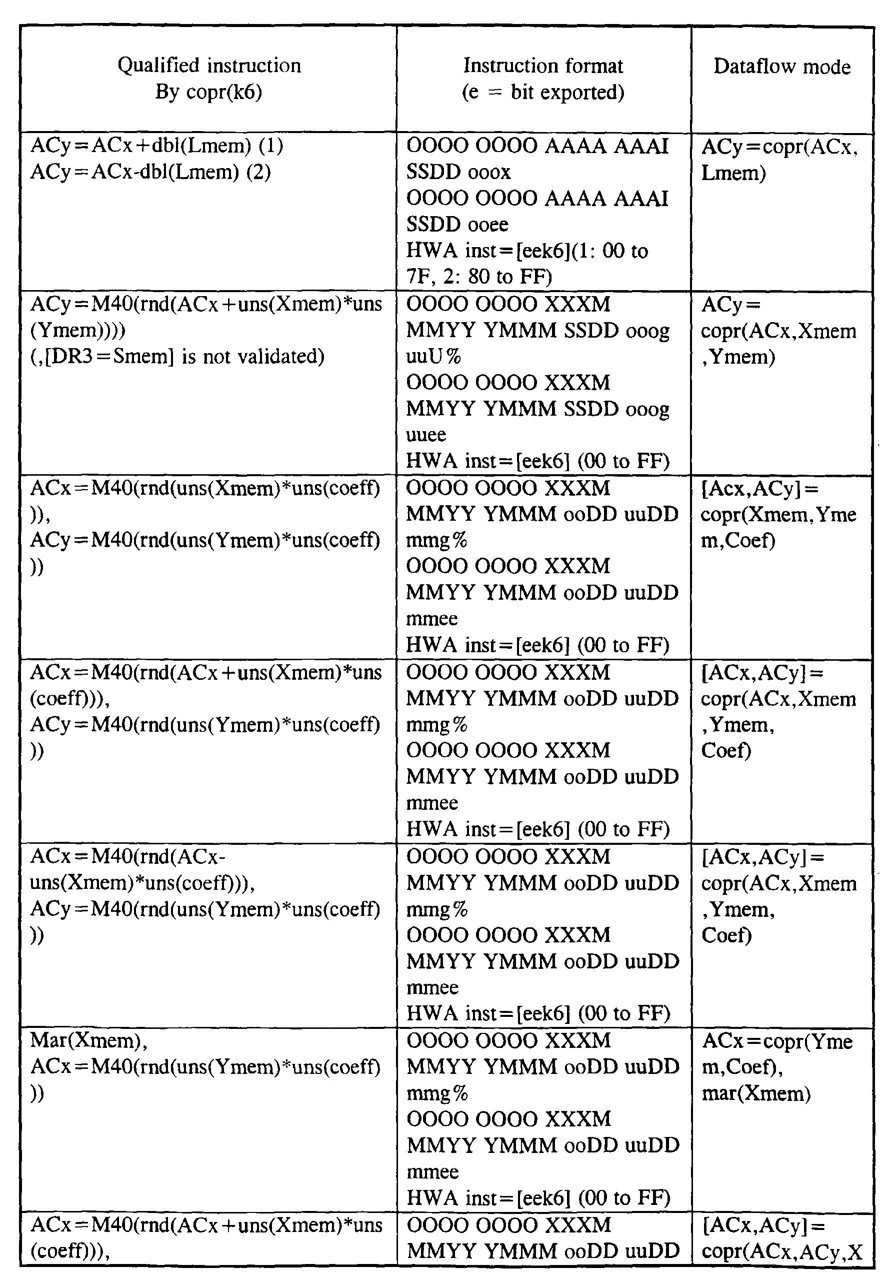

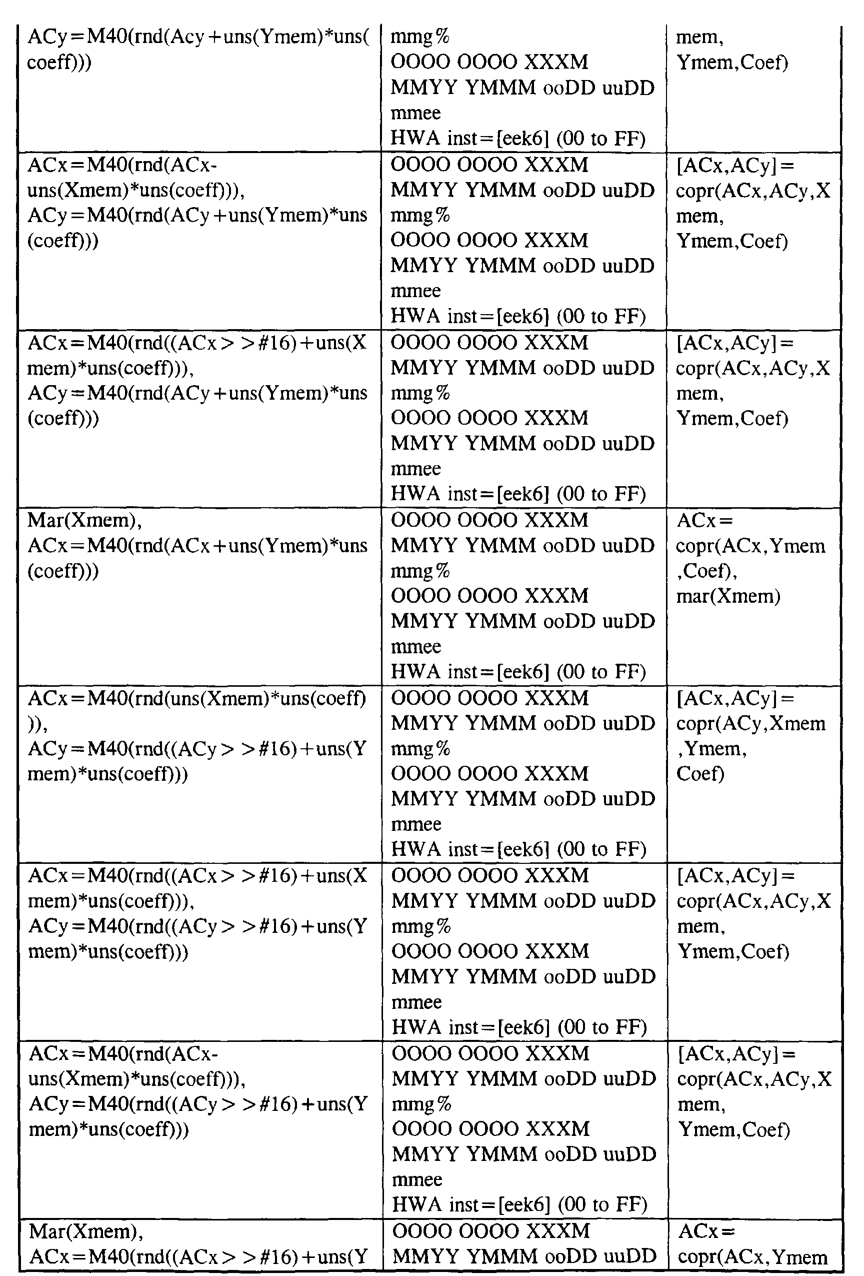

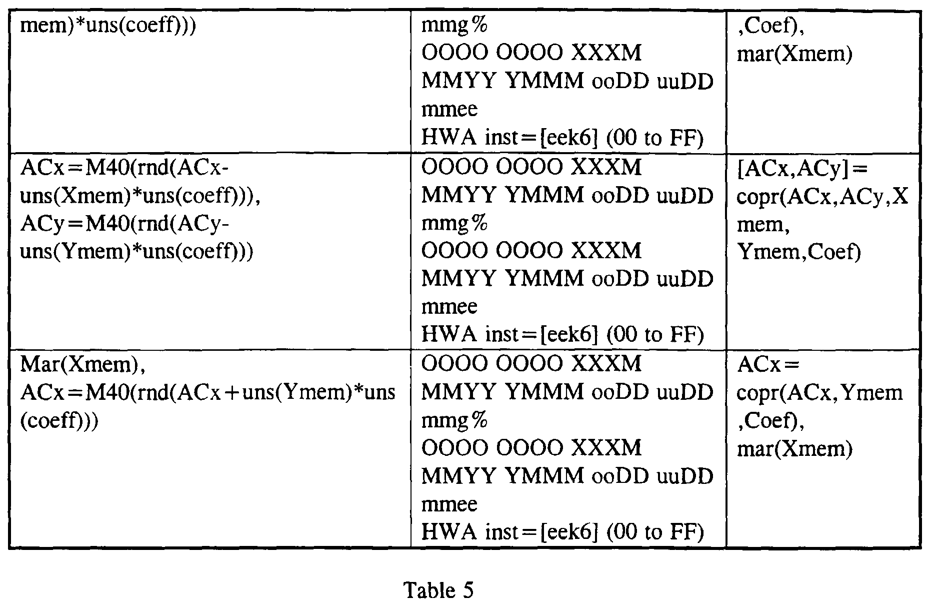

This is the table for "copr()" qualifier :

**Table 6**

| Qualified instruction By copr() | Instruction format (e/w = bit exported/encoded) | Dataflow mode |
|---|---|---|
| ACx=M40(rnd(ACx+uns(Xmem)*uns(c oeff))), | OOOO OOOO XXXM | [ACx,ACy]= copr(ACx,ACy, Xmem,Ymem, Coef) |
| | MMYY YMMM ooDD uuDD | |
| ACy=M40(rnd(ACy+uns(Ymem)*uns(c oeff))) (1) | mmg% | |
| | OOOO OOww XXXM | |
| | MMYY YMMM wwDD | |
| ACx=M40(rnd(ACx-uns(Xmem)*uns(coeff))), | eeDD mmee | |
| ACy=M40(rnd(ACy+uns(Ymem)*uns(coeff))) (2) | | |
| ACx=M40(rnd((ACx > >#16)+uns(Xmem)*uns(coeff))), | | |
| ACy=M40(rnd(ACy+uns(Ymem)*uns(coeff))) (3) | | |
| ACx=M40(rnd((ACx > >#16)+uns(Xmem)*uns(coeff))), | | |
| ACy=M40(rnd((ACy > >#16)+uns(Ym em)*uns(coeff))) (4) | | |
| | HWA inst=[wwwweeee] (1: 00 to 0F, 2: 10 to 1F, 3: 20 to 2F, 4: 30 to 3F, 5: 40 to 4F, 6: 50 to 5F) | |
| ACx=M40(rnd(ACx-uns(Xmem)*uns(coeff))), | | |
| ACy=M40(rnd((ACy > >#16)+uns(Ymem)*uns(coeff))) (5) | | |
| ACx=M40(rnd(ACx-uns(Xmem)*uns(coeff))), | | |
| ACy=M40(rnd(ACy-uns(Ymem)*uns(coeff))) (6) | | |
| ACy=M40(rnd(ACx+uns(Xmem)*uns(Ymem)))) | OOOO OOOO XXXM | ACy= copr(ACx,Xmem, Ymem) |
| | MMYY YMMM SSDD ooog | |
| (,[DR3=Smem] is not validated) (1) | uuU% | |
| | OOOO OOOO XXXM | |
| | MMYY YMMM SSDD oeoe | |
| ACy=M40(rnd((ACx > >#16)+uns(Xmem)*uns(Ymem)))) | eeee HWA inst=[00eeeeee] (1: 00 to 1F, 2: 20 to 3F) | |
| (,[DR3=Smem] is not validated) (2) | | |

This is the table for "S(L)mem=ACx, copr()" qualifiers (cccc field is coming from these qualifiers) :

**Table 7**

| Qualified instruction By S(L)mem=ACx, copr() | Instruction format (e/w = bit exported/encoded) | Dataflow mode |
|---|---|---|
| ACy=rnd(ACx*ACx) (1) | OOOO OOOE SSDD ooo% | ACy=copr(ACx), |
| ACy=saturate(rnd(ACx)) (2) | OOOO OOOE SSDD wwwe | Smem=Acz |
| ACy=rnd(ACx) (3) | HWA inst=[wwwecccc](1: 00 to 1F, 2: 20 to 3F, 3: 40 to 5F) | ACy=copr(ACx), Lmem=Acz |
| ACy=rnd(ACy*ACx) (1) | OOOO OOOE SSDD ooo% | ACy=copr(ACx,ACy), |
| ACy=rnd(ACy+ACx*ACx) (2) | OOOO OOOE SSDD wwwe | |
| ACy=rnd(ACy-ACx*ACx) (3) | HWA inst=[wwwecccc](1: 00 to 1F, 2: 20 to 3F, 3: 40 to 5F, 4: 60 to 7F) | Smem=Acz |
| ACy=rnd(ACy+\|ACx\|) (4) | | ACy=copr(ACx,ACy), |
| | | Lmem=Acz |
| Max_diff(ACx,ACy,ACz,ACw) | OOOO OOOE SSDD oooo | [ACx,ACy]=copr(ACx,Acy), |
| | SSDD xxxx | |
| | OOOO OOOE SSDD oooo | Smem=Acz |
| | SSDD eeee | [ACx,ACy]=copr(ACx,Acy), |
| | HWA inst=[eeeecccc] (00 to FF) | Lmem=ACz) |
| ACy=rnd(Smem*Acx) | OOOO OOOO AAAA AAAI | ACy=copr(ACx,Smem), |
| (,[DR3 =Smem] is not validated) | SSDD ooU% | |
| | OOOO OOOO AAAA AAAI | Smem=Acz |
| | SSDD ooee | |
| | HWA inst=[00eecccc] (00 to 3F) | |
| ACy=ACx+dbl(Lmem) (1) | OOOO OOOO AAAA AAAI | ACy=copr(ACx,Lmem), |
| ACy=ACx-dbl(Lmem) (2) | SSDD ooox | |
| | OOOO OOOO AAAA AAAI | Lmem=Acz |
| | SSDD ooee | |
| | HWA inst=[00eecccc](1: 00 to 1F, 2: 20 to 3F) | |

Some default decoding rules are also defined :
1) Any other instruction pair built with the "copr()" class that is not in the tables above is
   rejected by the hardware and a "nop" is executed, instead.
2) Status bit update flow coming with the standalone D Unit instruction is disabled when this
   instruction is qualified by the "copr()" class. The only exception to this rule is for zero flags. Update of these bits in destination accumulators is allowed from the hardware accelerator and they receive the content carried by the zero flags signals computed by the hardware accelerator.
3) Other fields than those used to build the HWA instruction are processed as defined on the
   standalone instruction. If some of the "e" or "w" fields above overlap with opcode fields, then these opcodes will be also used as for normal instruction process in the machine pipeline.

A timing diagram for a single-cycle operation is shown in Figure 18. Input capacitance, output drive strength, delays from clock to outputs and slopes, input setup and hold time are characterized as part of the CPU timing extractions. Moreover, being that this invention anticipates that more than one hardware accelerator can be connected to this bus scheme, ACx[w,z] and ACy[w, z] can be tri-state signals. The Hardware accelerator that recognizes its instruction field will drive the bus at the end of the clock cycle.

### Software view of the hardware accelerator:

In order to co-design software to use the hardware accelerator and its functional reference, the C model of processor 12 (TI-DSP # C55x) will provide templates and hooks to plug a view of the hardware. This will be performed by a function call associated with controls of "copr()" and instruction dispatch decoding which operates in the Execute phase of the model pipeline. The function template will contain parameters definition and types. A user will have to provide the C code corresponding to hardware accelerator behavior. By default, when no accelerator is connected to the interface, the function returns 0 results on accumulator buses and corresponding zero flag is set to '1'.

In terms of software development, "copr()" qualification can be supported by MACRO statements. Below is an example of such an approach:

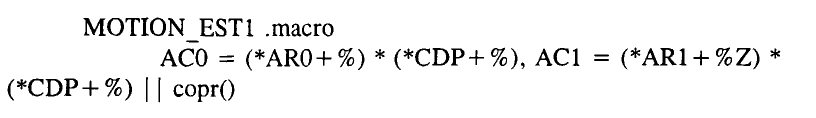

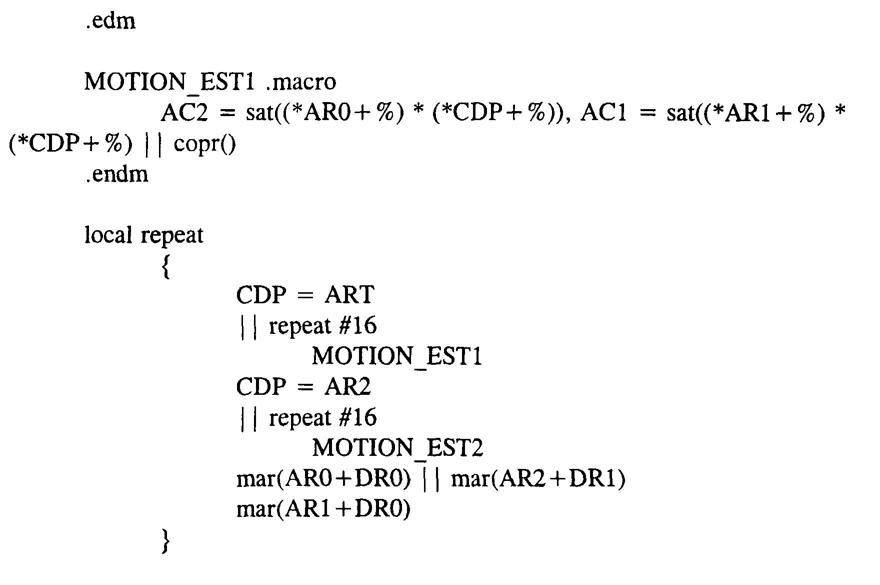

### Hardware view of the hardware accelerator:

The hardware accelerator appears in VHDL models of the CPU (functional and timing models). All the signals are characterized with respect to the "clk" clock, according to table below:

**Table 8**

| | | |
|---|---|---|
| bbus, cbus, dbus | Intrinsic delay/drive | clk rising |
| ACxr, Acyr | Intrinsic delay/drive | clk rising |
| ACxz, Acyz | setup/hold times | clk rising |
| A Cxw, Acyw | setup/hold times | clk rising |
| HWStatus | intrinsic delay/drive | clk rising |
| Hwinst | intrinsic delay/drive | clk rising |
| Hwstrobe | intrinsic delay/drive | clk rising |
| Hwbshaden | intrinsic delay/drive | clk rising |
| Hwcshaden | intrinsic delay/drive | clk rising |
| Hwdshaden | intrinsic delay/drive | clk rising |
| Hwstallw | intrinsic delay/drive | clk falling |
| Hwerror | setup/hold times | clk rising |

An example of how usage of the hardware accelerator coupling scheme and of how software versus hardware trade-offs can be implemented is disclosed below, in video application field. Most of the cycle count in motion estimation comes from a Full Search (FS) task which consists of computing the distortions obtained by comparing a macroblock to a certain area of pixel in the reference image and repeating this operation for all macroblocks in the image from which motion has to be estimated. For h261 algorithm, the window around the macroblock extends by +/- 15 pixels. For a single macroblock, computations consist of 256 distortions each built from 256 sums of absolute differences between a macroblock pixel and a reference window pixel. Pixels are coded on 8 bits (luminance) and distortions are coded on 16 bits.

One way to decrease pure computation bandwidth at the image level is to apply a Hierarchical Full Search (HFS). This comprises generating, from the first image, sub-images derived by filtering in order to downsample by 2 on both directions the sub-image from the previous one. With 4 levels of sub-images, Full Search algorithm can be applied on a window which extends only by +/- two pixels around the macroblock (only 25 distortions are needed). This is the implementation chosen for the example. The hardware accelerator 102 will implement the basic computations to obtain the distortions. These will be stored in the accumulators (up to 4x2 = 8 distortions can fit). The search window is stored in a dual access memory bank. The macroblock of the reference image is stored in a Single access memory bank. Using the type 1 instructions re-defined by the copr() qualifier, it is possible to fetch, at each cycle, 2 pixels from the reference macroblock and 4 pixels from the search window. Thus, 3 distortions can be processed in parallel:

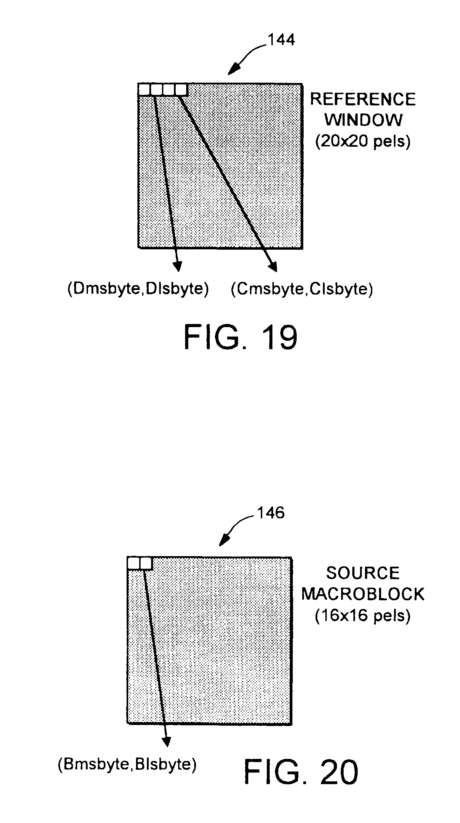

FIG. 19 illustrates a search window with 20x20 pixels, generally at 144. FIG. 20 illustrates a source macroblock with 16x16 pixels, generally at 146.

### Operation mode 1:

ACxwmsbyte=abs(Dmsbyte-Bmsbyte)+abs(Dlsbyte-Blsbyte)+ACxmsbyte;
ACxy=zero(ACxw), ACxs=0
ACxwlsbyte=abs(Dlsbyte-Bmsbyte)+abs(Cmsbyte-Blsbyte)+ACexrlsbyte
ACywmsbyte=abs(Cmsbyte-Bmsbyte)=abs(Clsbyte-Blsbyte)+ACxrmsbyte;
ACyz=zero(Acyw), ACys=0
ACywlsbyte=ACyrlsbyte
   Estimated cost (modes 1 and 2):
   3000 gates

### Operation mode 2:

ACxwmsbyte=abs(Dmsbyte-Bmsbyte)+abs(Dlsbyte-Blsbyte)+ACxmsbyte;
ACxy=zero(ACxw), ACxs=0
ACxwlsbyte=abs(Dlsbyte-Bmsbyte)+abs(Cmsbyte-Blsbyte)+ACexrlsbyte
ACywlsbyte=abs(Cmsbyte-Bmsbyte)=abs(Clsbyte-Blsbyte)+ACxrlsbyte;
ACyz=zero(ACyw), ACys=0
ACywmsbyte=ACyrmsbyte

Distortions are stored on upper and lower parts of the accumulators. Mode 1 and 2 in the hardware accelerator allow the insertion of distortion on upper or lower parts as needed. As an example, if hardware instructions 00 and 01 are selected for mode selection, the main loop to manage this extension is given below.

### Initializations:

AR0 = (base address for reference window)
AR2 = (base address for macroblock)
AR3 = (base address for distortion storage)
DR0 = #20
DR1 = #16
BRC0 = #5
BRC1 = #16
AR1 = AR0 + 1
BK0 = #20
BKC = #16
AC0 = #0
AC1 = #0
AC2 = #0

Main loop for computation of the table of 5x5 distortions

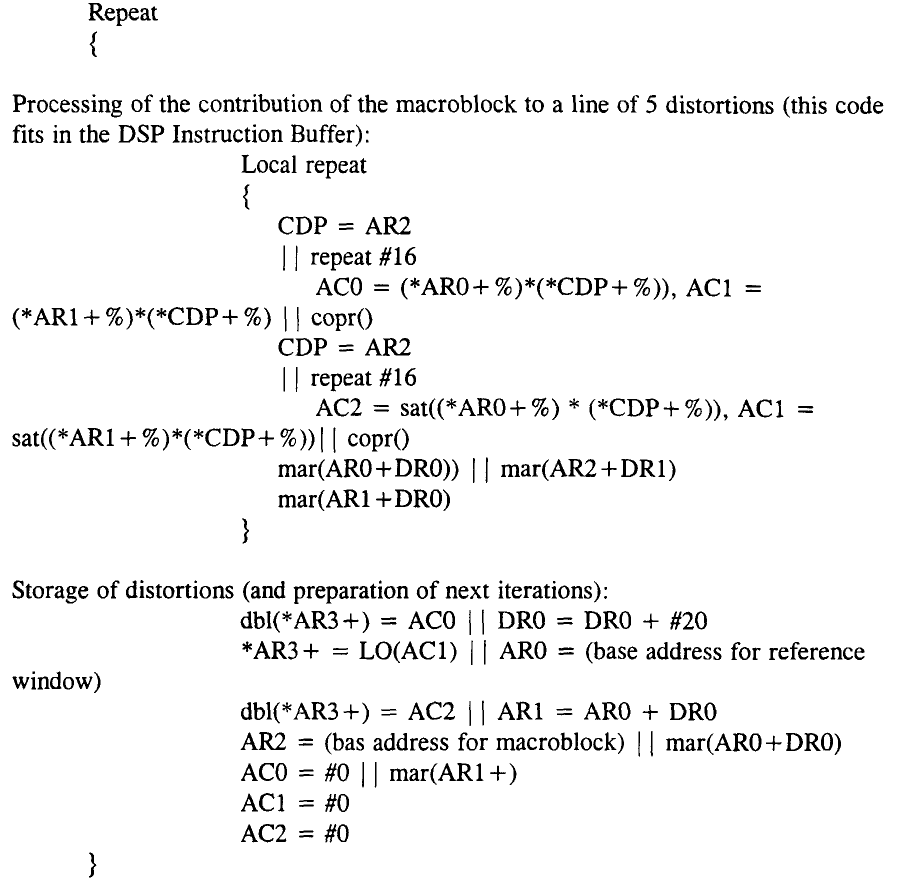

If the main loop does not fit in the DSP core instruction buffer, first iteration inside will be executed with a cycle penalty on redefined instructions. As a result, execution time of the loop above can be evaluated as: 2775 cycles. The total number of Mean Absolute Error computations (sub followed by abs() and then by add) are 25x16x16 = 6400, which means 2.3 computations per cycle.

Thus, an advantage of the invention is that all of the basic mechanisms are within the hardware accelerator 102, the RAM 104 and the DSP core 18. The hardware accelerator receives data in the same way as other operators in the DSP because it is seen as a DSP resource by the instruction set. It can receive up to three values from memory per cycle. It knows about the internal resources through two read and two write buses to get two of the accumulator contents. It doesn't have to know about transfer of data from one part of the system to another. The hardware accelerator controls are exported from the DSP instruction to the edge of the processor. There is a strobe signal which is 1 bit (Hwstrobe), a micro-instruction which is 8-bits (Hwinst), a set of stalls indicators in the DSP pipeline (Hwstall) for optional control of internal state machines of the accelerator that should be maintained in sync with the pipeline activity and a bus error flag that is returned to the processor and merged into its bus error management (Hwerror). Decoding of the micro-instruction word can be done so that upper 3 bits identify a given hardware accelerator and the 5 lower bits define 32 instructions per accelerator. By using these three bits to select a hardware accelerator, a user can manage the connection to the accumulators write buses (through either tri-state or mux-based implementation).

In addition the invention exports a set of status lines coming out of the DSP such as rounding mode, so that it can be aware of the arithmetic modes that are used by the DSP and the hardware accelerator model is sending back "zero result flags" associated with the 2 40-bit results.

The hardware accelerator, as disclosed, is physically separate from the DSP core. A user of the invention should be able to connect the hardware accelerator and a DSP together, from a software point of view, and use the hardware accelerator as if it were part of the instruction set. The invention discloses some classes of instructions - and contemplates other classes - but from a software standpoint, a user can put the control of these in software loops. It could connect this model to the software simulator to debug its software. Then, a user could move the hardware accelerator functional view to VHDL in order to generate the gate level view. As a result, the impact of this is in several steps in the design flow - application level and design level. For design level a user will also need timing information for the performance information of the pins, etc.

In any embodiment of the invention, a user can always prototype the content of the hardware accelerator by using some of the standard DSP features in the loop. As an example, all the functionality can be implemented in the ALU. When moving to the Hardware accelerator, the "software" version will be accelerated by a factor between 4 and 20, depending on the application. The level of acceleration is part of the compromise between hardware complexity added in the accelerator and software.

Another novel aspect of the invention is in the data flow. The instruction interface is used to facilitate the export of behavior such as, "multiply three eight bit values all together to generate something, and return that through this bus to the accumulators". An instruction and a bit field are exported to controller, but sources and destinations are not exported. The current invention provides access to all of the internal resources of the DSP which are exported to the accelerator for on the fly usage and a value is returned back. The value is stored within the core when the execution is done. As a result, the invention does not have to use the MCR mode of the prior art which would move the values that would be computed in the hardware accelerator back to the internal core through this bus. In contrast to the present invention, the prior art does not export sources and destinations.

As a result, the invention facilitates a single cycle operation that uses three reads of memory plus two accumulator reads and returns back to the accumulators in the same cycle. There is no transfer - the transfer is built within the copying. The same is repeated when data RAM 104 is utilized. In the prior art, in contrast, to do processing from the buffer in the RAM requires that the ARM install the buffer first after which it performs control operations and processing through the RAM and thereafter move the results back to the DSP. The present invention allows all of this to be done in one instruction.

If the DSP ultimately selected is not of the TI-DSP #C55x family, or if the functionality of the class of instructions in the DSP (TI-DSP #C55x) are not used then, alternatively, the invention contemplates use of a processor "copr" instruction, which can be generated in the processor's instruction table which can be put in parallel with any instruction which extracts from some instructions, fields of the instructions. As an example, there is an op code field and some reference to memory access (op-code field is all the zeros on page - as previously disclosed). The result is a reference to memory dual memory (xxxmmmyyy) along with (MMM) code which is the third access. On top of this, there are source and destination of accumulators (ooDD & uuDD) and all the remaining fields which define (in a dual-mac for example) the op-codes controlling the processing function. Four times two bits would be exported at this interface boundary, defining the eight bits to control the hardware accelerator.

Also, according to the invention, a decoder of the hardware accelerator manages the instruction field and the strobe. From these the hardware accelerator can generate necessary clocks and thus reduce power consumption when the accelerator is not used.

In summary, the hardware acceleration concept of the invention has two parts: 1) the hardware part, which is the interface, and its capabilities, and 2) the instruction set part which is used to control the interface and the different mode and the sharing. The invention allows various types of tradeoffs between software and hardware because much of the functionality is performed within the machine pipeline.

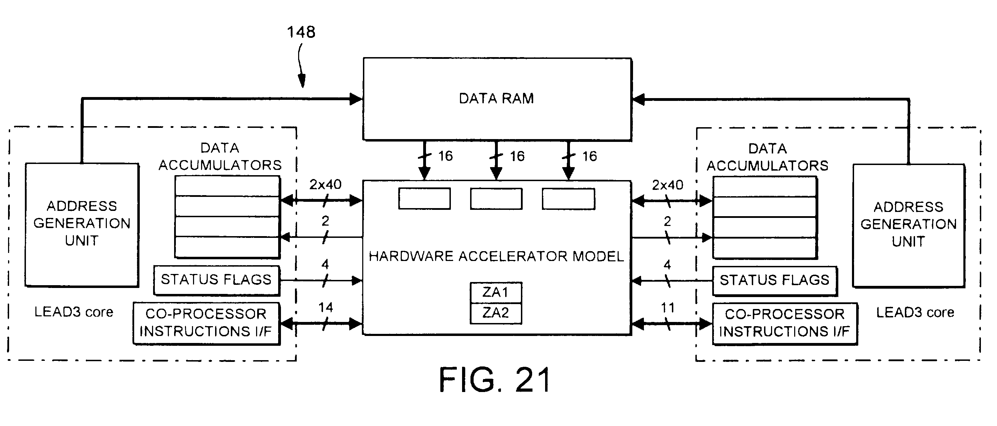

While the present invention has been disclosed in a single processor system, providing multiple operation in both single and multi-cycle operation, the invention also contemplates other embodiments. As an example, the hardware accelerator can be used to connect two DSPs (TI C55xs in this case - as shown generally at 148 in FIG. 21) cores together, because what can be done in a single core embodiment can also be used in a multi-core embodiment to synchronize the transfer of internal resources of one core to the other, using the hardware accelerator protocol. Thus, it may be desirable to have two cores and a hardware accelerator on the same chip when there is a need to exchange some of the computation, via daisy chaining - similar to what can be done in SIMD machines where operators exchange values - especially if they share the same program or execute the same type of program.

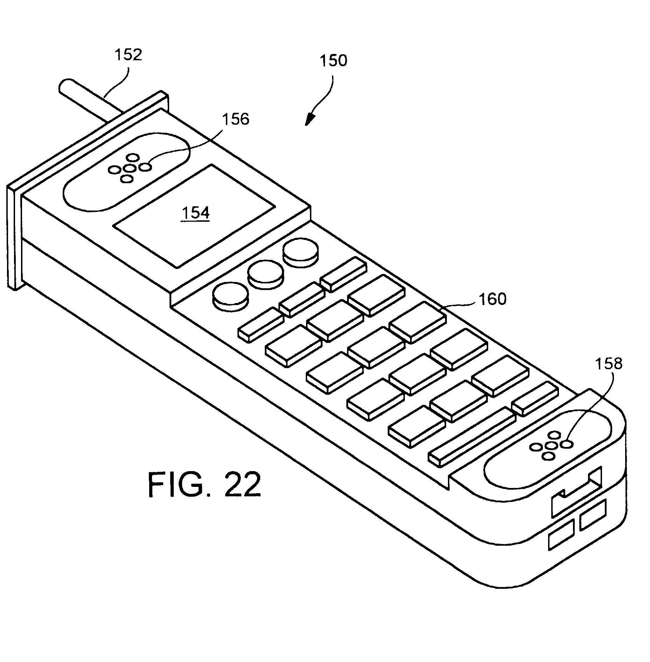

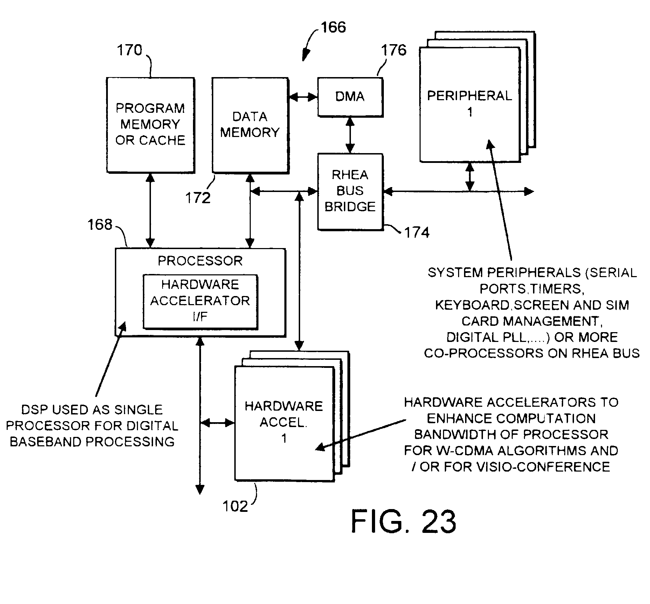

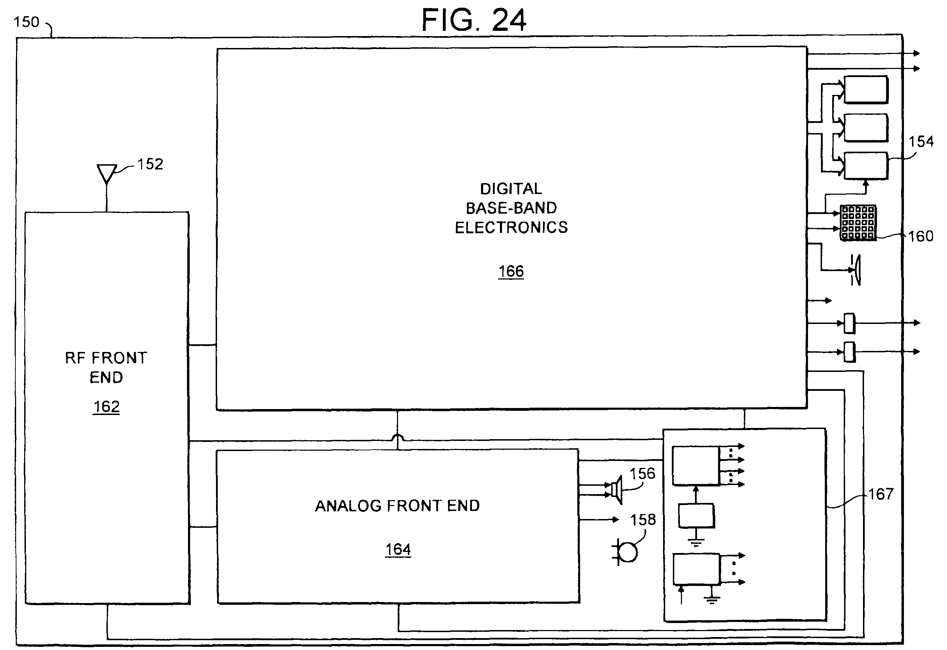

FIG. 22 illustrates a portable telephone (shown generally at 150) which incorporates the invention. FIG. 23 illustrates a block diagram of various peripherals coupled to a processor 168, according an embodiment of the invention. FIG. 24 is a basic block diagram of portable telephone 150. Telephone 150 includes an antenna 152, an LCD display 154, a speaker 156, a microphone 158 and a keyboard 160. Portable telephone 150 further comprises an RE Front End (RF chip) 162 coupling an analog front end (analog base band chip) 164 and digital base band electronics (digital base band chip) 166 to antenna 152. A power source 167 is connected to RF front end 162, analog front end 164, and digital base band 166.

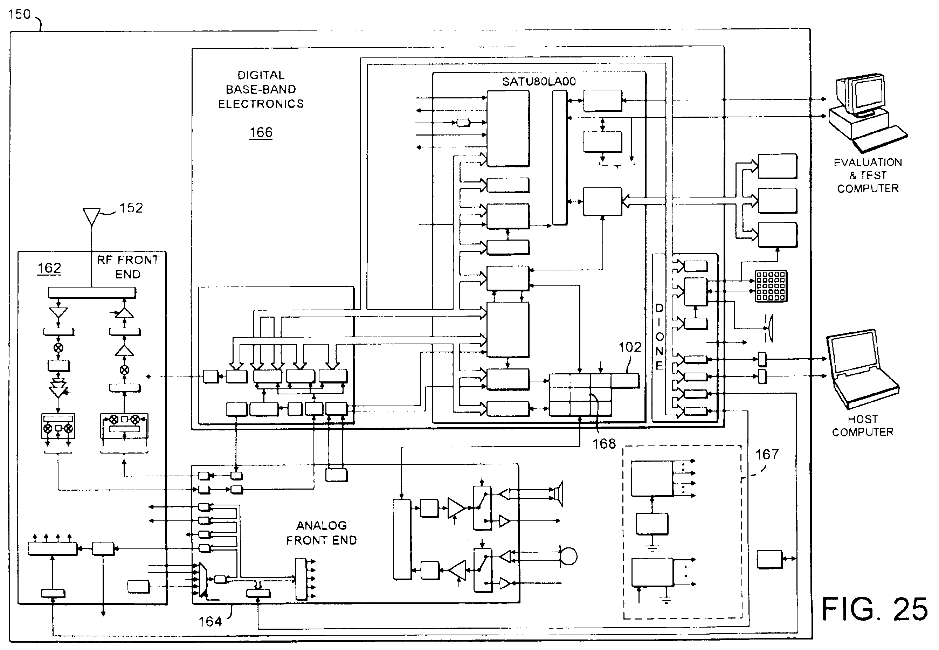

FIG. 25 is a schematic diagram of the telephone 150 illustrated in FIG. 24. A processor 168 (TI C55x DSP) is coupled to a program memory or cache 170, a data memory 172, a RHEA bus bridge 174 and to hardware accelerators 102. These hardware accelerators are also coupled to data memory 172. A DMA 176 couples data memory 172 to RHEA bus bridge 174. FIG. 15 is a schematic diagram of a cellular telephone 180 that utilizes code division multiple access (CDMA) techniques to communicate with cellular base stations. Hardware accelerator 102 is located within digital base band 166. While a cellular telephone is disclosed that utilizes CDMA techniques, other communication techniques may also be used.

While the present invention has been described with respect to specific embodiments thereof, this description is not to be construed in a limiting sense. Various changes and modifications may be apparent to persons skilled in the art upon reference to this description. It is therefore contemplated that the appended claims will cover any such modifications or embodiments as fall within the true scope of the invention.

## Claims

1. A data processing apparatus, comprising:
a random access memory;
a hardware accelerator coupled to said random access memory; and
a processor coupling said hardware accelerator to said random access memory.

2. A data processing apparatus, comprising:
a random access memory;
a first processor coupled to said random access memory;
a second processor coupled to said random access memory; and
a hardware accelerator coupling said random access memory to said first and said second processors.

3. The data processing apparatus of any one of the previous claims, wherein said data processing apparatus performs multiple operations in a single cycle.

4. The data processing apparatus of any one of the previous claims, wherein said multiple operations comprise a memory access, an operation and a register transfer.

5. The data processing apparatus of any one of the previous claims, wherein at least one bus couples said random access memory to said hardware accelerator.

6. The data processing apparatus of Claim 5, wherein said at least one bus is a 16-bit bus.

7. The data processing apparatus of any one of the previous claims, wherein multiple buses couple said processor to said hardware accelerator.

8. The data processing apparatus of Claim 7, wherein said multiple buses include a thirteen bit bus, a four bit bus, a two bit bus and a 2x40 bit bus.

9. The data processing apparatus of Claim 8, wherein said thirteen bit bus is bi-directional, said four bit bus is unidirectional, said two bit bus is unidirectional and said 2x40 bit bus is bi-directional.

10. The data processing apparatus of any one of the previous claims, wherein said processor is a digital signal processor.

11. The data processing apparatus of Claim 10, wherein said digital signal processor comprises an address generation unit coupled to said random access memory, data accumulators coupled to said hardware accelerator, status flags coupled to said hardware accelerator and a co-processor instructions interface coupled to said hardware accelerator.

12. The data processing apparatus of any one of the previous claims, wherein said hardware accelerator comprises:
a decoder;
a first register coupling said decoder to an operator kernel; and
a clock controller coupled to said operator kernel.

13. The data processing apparatus of Claim 12, wherein said decoder is coupled to receive an instruction signal and a strobe signal and to output an error signal;

14. The data processing apparatus of Claim 12 or 13, wherein said first register and said clock controller are coupled to receive a clock signal.

15. The data processing apparatus of any one of Claims 12-14, further comprising a second register coupled to said operator kernel and coupled to said clock controller.

16. The data processing apparatus of Claim 15, further including a third register, said third register coupled to said operator kernel and coupled to said second register.

17. The data processing apparatus of Claim 12, 13 or 15, further including a third register and a fourth register, said third register coupled to said operator kernel and coupled to said second register and said fourth register coupled to said operator kernel and coupled to said third register.

18. The data processing apparatus of Claim 17, wherein said second, third and fourth registers are also coupled to a data ram.

19. The data processing apparatus of any one of the previous claims, further including a bus coupled to an XR port on said operator kernel.

20. The data processing apparatus of any one of the previous claims, further including a bus coupled to an YW port on said operator kernel.

21. The data processing apparatus of any one of the previous claims,
further including a bus coupled to an XW port on said operator kernel.

22. The data processing apparatus of any one of the previous claims, further including a bus coupled to flag port on said operator kernel.

23. A data processing apparatus, comprising:
a random access memory;
a processor; and
an interface coupling said random access memory to said processor, said data processing apparatus having the capability of processing multiple operations in a single cycle.

24. The data processing apparatus of Claim 23, wherein an instruction set is used to control said interface and the different modes and sharing of data between said processor and said interface

25. A telecommunications device comprising a data processing apparatus according to any one of claims 1-24.

26. The telecommunication device of Claim 25, further including RF circuitry coupling analog circuitry and digital circuitry to an antenna, said digital circuitry including a hardware accelerator coupled to a processor; and
a power source connected to said RF, analog and digital circuitry.

27. The telecommunication device of Claim 26, wherein said RF circuitry comprises an RF front end, said analog circuitry comprises an analog front end and said digital circuitry comprises digital base band electronics.

28. The telecommunication device of any one of Claims 25-27, further including a display and a keyboard coupled to said digital circuitry and a speaker and a microphone coupled to said analog circuitry.

29. A method of processing information in a single processor data processing system wherein multiple operations are processed in a single cycle.

30. A method of using hardware acceleration in a data processing system to facilitate multiple operations in a single cycle.
